# EUROPEAN PATENT SPECIFICATION

(11) **EP 1 637 294 B1**
(45) Date of publication and mention of the grant of the patent: **20.04.2011**
(21) Application number: 04729661.1
(22) Date of filing: 27.04.2004
(51) Int. Cl.: B26D 7/20, B65G 47/244

(54) **SYSTEM FOR MOVING A FOOD PRODUCT ON A CUTTING BENCH OR SIMILAR**
SYSTEM ZUM BEWEGEN EINES LEBENSMITTELS AUF EINER SCHNEIDBANK ODER DERGLEICHEN
SYSTEME PERMETTANT DE DEPLACER UN PRODUIT ALIMENTAIRE SUR UNE TABLE DE COUPE OU ANALOGUE

(30) Priority: 30.04.2003 ES 200300983
(43) Date of publication of application: 22.03.2006
(73) Proprietor: Metronics Technologies S.L., 31110 Noain (ES)
(72) Inventor: DE ORTE GLARIA, Benito, Andrés, E-31110 Noain (ES)
(74) Representative: Burbaud, Eric
(86) International application number: PCT/ES2004/000178
(87) International publication number: WO 2004/096507

(56) References cited:
- DE-A1- 4 217 157
- ES-A1- 2 165 323
- ES-T3- 2 030 568
- US-A- 3 722 657
- US-A- 4 463 636
- US-B1- 6 418 823

## Description

### Field of the Art

The present invention relates to a system of moving food products for the cutting thereof by means of a water jet or for other operations such as, for example, decorating, with a kinematic arrangement that maintains a discharge device fixed, the object to be worked on being what moves for the operations to be carried out.

### State of the Art

The use of a pressure water jet for cutting foods is already known, there being multiple applications of this technique in which the discharging means of the water jet are arranged incorporated in a moving assembly allowing its movement for making the cuts provided for on the object to be worked on that is maintained fixed on a support surface.

This functional form gives rise to the fact that when the products are cut, the pressure water jet impacts against the product support surface, causing a cloud of water droplets on the cutting area.

Said cloud makes seeing the cuts difficult, preventing checking if the cuts are suitably made; and the moisture cloud further envelopes the product subjected to the cutting, making the system inapplicable for products that cannot become wet, such as pastry products, pizzas, etc.

On the other hand, the known embodiments of this cutting technique are complicated and expensive, the corresponding installations occupying a large space.

### Object of the Invention

The present invention provides a system of moving a food product comprising the features of claim 1. This system solves the problems indicated by means of an arrangement that allows making cuts by means of a water jet and allows other operations, such as decorating for example, on food products, with an assembly with particular features, according to which a discharge element is kept fixed in place and it is the object to be worked on that moves with respect to the location of the discharge device.

This system provides the discharge element on a fixed support, the holding means where the object to be worked on is placed running under said element, in an assembly of said holding means of the object with rotational movement and longitudinal travel ability with a drive actuation combining both movements.

The holding support of the object consists of a ring on which a grated tray is arranged, said ring being supported in a sliding manner between parallel guides, while on the peripheral edge it has a toothing by means of which it meshes with respective drive means acting in the longitudinal direction of the support guides.

An assembly in which the object to be worked on is placed on the grated tray that is on the moving ring, which tray can be removed so as to take the object with it, is thus obtained, such that by means of actuating the drive means the ring can be made to rotate and travel between the two parallel guides, allowing, by means of the combination of the operations, making any point of the object to be worked on pass underneath the position of the discharge device element, and following any path, so as to perform the operations provided for on said object.

The essential feature of the system is therefore based on the combination of a rotational movement and longitudinal travel applied to the holding support of the object to be treated, maintaining the element carrying out the action to be performed on the object fixed, applied by means of a simple and inexpensive kinematics, the installation of which occupies a very small space.

The discharge element that is maintained fixed can be, for example, a pressure water jet discharge device for cutting the objects to be worked on, or it can be a discharge device of another type, for example for supplying a decorative paste on pastry products or other similar products.

In the cutting application by means of a pressure water jet, the grated tray on which the object is supported allows the passage of the pressure water jet to the bottom part, thus preventing the occurrence of a moisture cloud over the object being cut that may affect it, and the cutting area also remains perfectly visible.

The means actuating the movement of the moving ring can be two notched belts or silent chains arranged independently from one another, one on each side, or a continuous belt or chain with respective lateral courses and transverse passages crossing at different heights, surrounding the moving ring in two opposite parts. With the same effect and without this altering the object, said means can also be two lead screws or two cylinders with a rack shaft, arranged on either side of the moving ring.

Therefore, said system object of the invention results from an embodiment, the features of which give it a life of its own and a preferential character for its application with respect to the water jet cutting systems currently known.

### Description of the Drawings

Figure 1 shows a plan view of the proposed system in an embodiment with two independent notched belts for the actuation of the moving ring.
Figure 2 shows a perspective view of the same previous system.
Figure 3 shows an enlarged detail of a partial section of the assembly of the system according to the same previous embodiment.
Figure 4 is a diagram of the system with a single continuous belt for the actuation of the moving ring.
Figure 5 is a diagram of the system with the actuation of the moving ring by means of two lead screws.
Figure 6 is a diagram of the system with the actuation of the moving ring by means of two cylinders with rack shafts.

### Preferred Embodiment

The object of the invention consists of a system for carrying out cuts by means of a pressure water jet, or for carrying out other operations, such as decorating for example, on pastry food products, pizzas, etc.

In the practical embodiment, the system is structured with a discharge device (1) which is arranged incorporated on a fixed support (2) located at a height so as to carry out a discharge onto an object (12) placed under it.

Located horizontally under the discharge device (1) there is a ring (3) on which a grated tray (4), which is removable and provided with handles (5) for handling it, is incorporated.

The ring (3) is supported in a sliding manner between parallel guides (6) which constitute stops preventing the movement of the ring (3) towards the sides, nevertheless allowing said guides (6) to rotate and travel in the longitudinal direction.

The peripheral edge of the ring (3) is provided with a toothing (7), which may be defined thereon or incorporated in a supplementary manner, for example by means of a detachable crown-wheel, said toothing (7) making a connection with respective notched actuation means (8) acting along the guides (6).

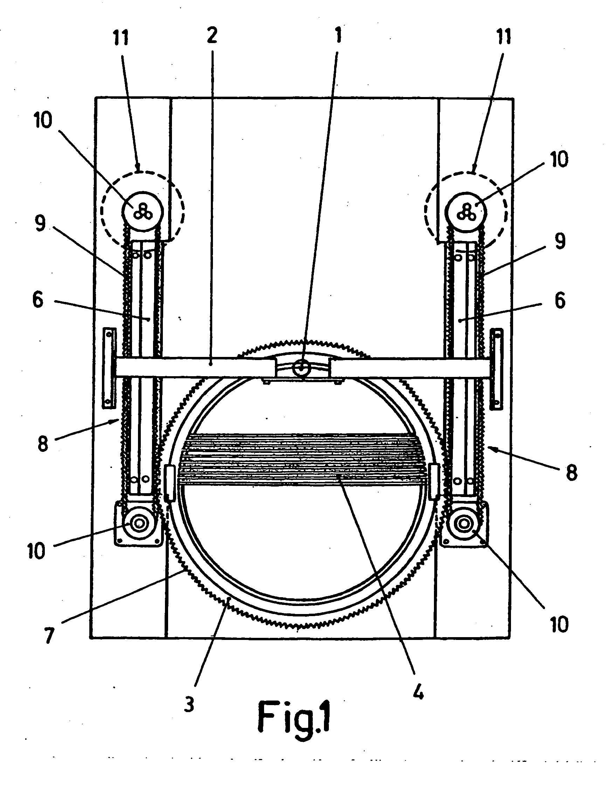

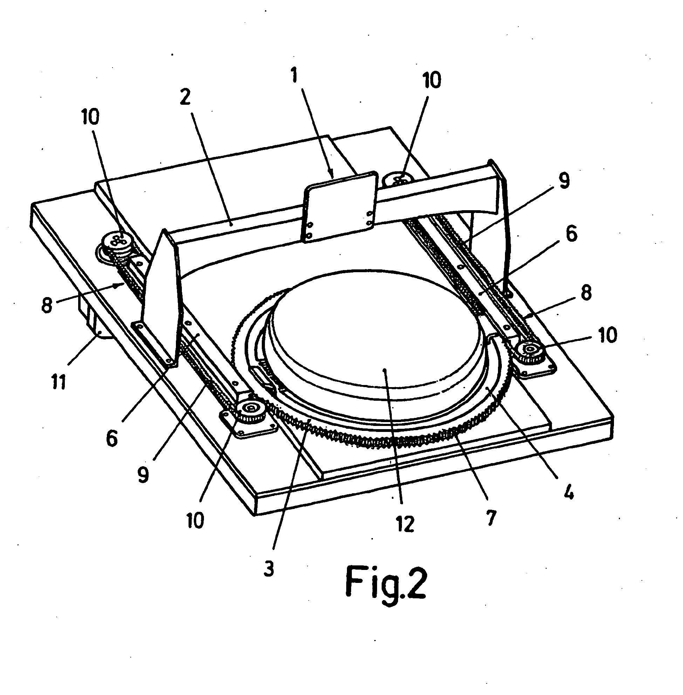

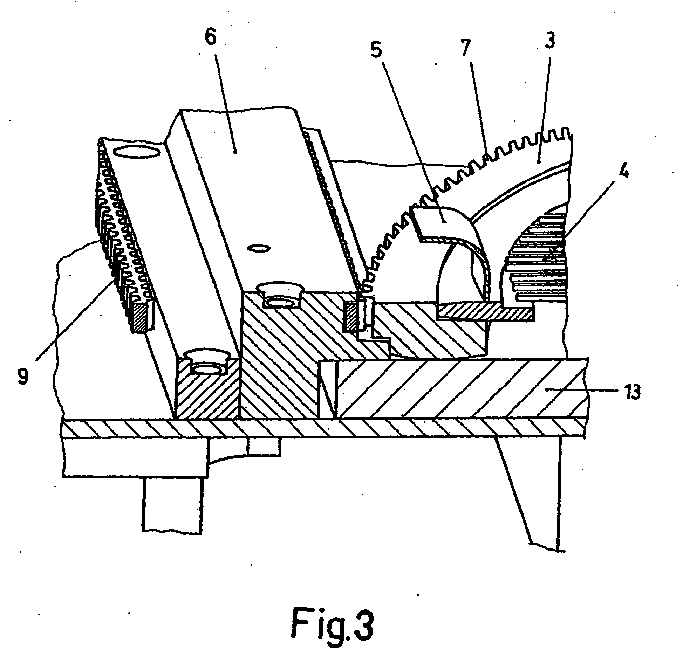

One solution for said means (8) could be, for example, as in Figures 1, 2 and 3, two notched belts (9), which are assembled in an independent manner in a closed loop on respective pairs of sheaves (10), each one of them incorporating an actuation motorization (11).

By means of actuating the motorizations (11), the belts (10) are actuated, acting in turn on the ring (3) through the toothing (7), such that by the two motorizations (11) acting simultaneously and at the same speed in the same direction, they make the ring (3) rotate by means of the belts (9) without the ring being shifted, said rotation of the ring (3) being in one direction or the other according to the rotation direction of the motorizations (11).

If on the contrary the motorizations (11) rotate in opposite directions, the belts (9) move the ring (3) along the guides (6) without rotating, the travel in one direction or the other being according to the opposite rotation directions of the motorizations (11).

The actuation of the motorizations (11) in the same direction or in opposite directions but at different speeds makes the ring (3) in this case receive a simultaneous rotation and travel actuation by means of the belts (9).

Therefore, by means of a controlled combination of the actuations of the motorizations (11), any point of the tray (4) located above the ring (3) can be made to pass under the discharge device (1), such that by placing any object (12) on the tray (4), discharges can be made thereon following any direction, the discharge device (1) remaining stationary.

The object (12) to be cut can be placed and removed for the operations to be carried out by means of the tray (4), being possible to assign the application, for example, for cutting by means of water jet, providing a pressure water jet discharge device (1) in which application the tray (4) allows, as a result of its grated structure, that in the cutting, the pressure water jet passes to the bottom portion after cutting the object (12), therefore the moisture cloud produced by spraying the water in the impact thereof on the collection base (13) remains under the object (12) without affecting it and without impairing vision in the cutting area.

The kinematics of the system also allows use for other types of operations that must be carried out on an object to be worked on according to variable courses, such that, for example, by replacing the pressure water jet discharge device (1) with a pump or similar means carrying a paste, the system can be used to decorate pastry products.

Actuation for moving the ring (3), as indicated, can also be achieved with other practical arrangements within the same concept of the invention, which is the movement of said ring (3) by means of a combination of rotation and travel so as to make any point of an object (12) to be worked on pass under a discharge device (1) located in a fixed position.

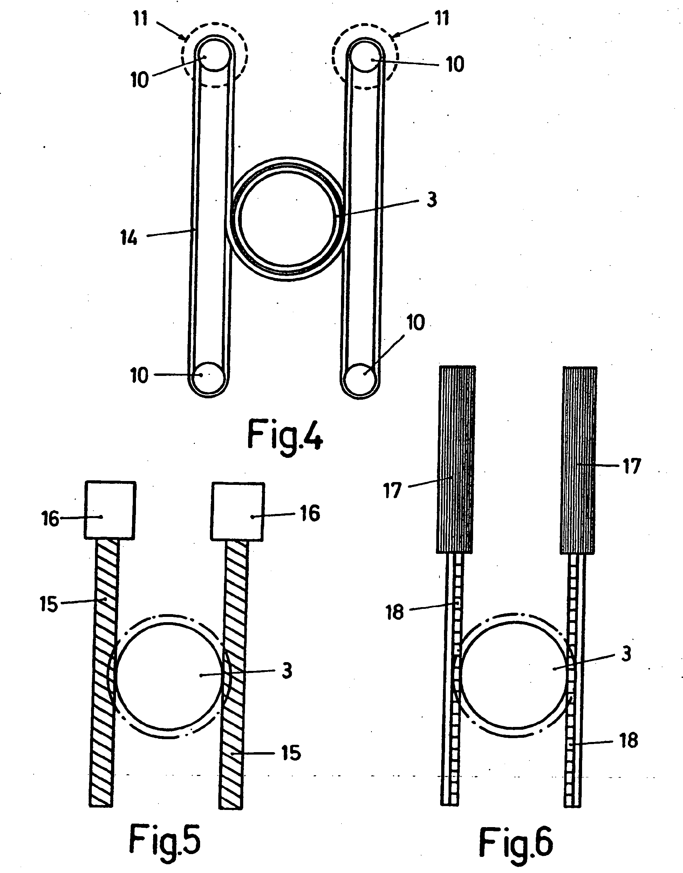

In this sense it has been provided, for example, that the ring (3) can be actuated by means of a single belt (14) arranged, as depicted in Figure 4, in a continuous manner between two lateral longitudinal courses, passing between them by means of two transverse courses crossing at different heights and running along respective opposite semi-contours of the ring (3).

Said actuation of the ring (3) can also be by means of two lateral lead screws (15) actuated by respective geared motors (16), as depicted in Figure 5, or also by means of two cylinders (17) with rack shafts (18), as depicted in Figure 6, with which solutions the ring (3) can also be moved in a combination of rotation and shifting with the same effect as that explained previously.

## Claims

1. A system of moving a food product on a cutting table or the like, of the kind comprising a support means of the object to be treated and a discharge device means for performing the operations to be carried out on the object, said means being arranged in an assembly of relative movement with respect to one another so as to act with the discharge device in paths of different directions on the object to be worked on, **characterized in that** a discharge device (1) is arranged incorporated on a fixed support (2), whereas incorporated under the position thereof there is a ring (3) intended for placing the object (12) to be worked on thereon, said ring (3) moving on sliding support between parallel guides (6) with rotational and longitudinal travel ability thereon.

2. A system of moving a food product on a cutting table or the like according to claim 1, **characterized in that** the ring (3) connects on the periphery, by means of a notched edge (7), with notched actuation means (8) acting along the guides (6), allowing carrying out combined rotation and shifting movements of said ring (3).

3. A system of moving a food product on a cutting table or the like according to claim 1, **characterized in that** arranged on the ring (3) there is a grated tray (4) on which the object (12) to be worked on is placed, said tray (4) allowing the passage of a cutting water jet even underneath it after the object (12) to be worked on has been traversed in a cutting application by means of a pressure water jet discharge device (1).

4. A system of moving a food product on a cutting table or the like according to claim 2, **characterized in that** the means (8) actuating the movement of the ring (3) are made up of two independent notched belts (9) which are actuated by respective motorizations (11) and laterally connect with the ring (3) in respective opposite areas.

5. A system of moving a food product on a cutting table or the like according to claim 2, **characterized in that** the means (8) actuating the movement of the ring (3) are made up of one notched belt (14) extending continuously in two parallel lateral courses provided with respective motorizations (11), going from one side to the other by means of transverse courses crossing at different heights and running along respective opposite semi-contours of the ring (3).

6. A system of moving a food product on a cutting table or the like according to claim 2, **characterized in that** the means (8) actuating the movement of the ring (3) are made up of two lead screws (15) actuated by respective geared motors (16) and laterally connecting with the ring (3) in respective opposite areas.

7. A system of moving a food product on a cutting table or the like according to claim 2, **characterized in that** the means (8) actuating the movement of the ring (3) are made up of two cylinders (17) with rack shafts (18) laterally connecting with the ring (3) in respective opposite areas.

## Patentansprüche

1. System zum Bewegen eines Nahrungserzeugnisses auf einem Schneidetisch oder dergleichen, umfassend Trägermittel des zu behandelnden Objekts und Abgabevorrichtungsmittel zum Durchführen der an dem Objekt auszuführenden Tätigkeiten, wobei die Mittel in einer Anordnung einer Relativbewegung in Bezug zueinander derart angeordnet sind, dass sie mit der Abgabevorrichtung in Wegen unterschiedlicher Richtungen auf das zu bearbeitenden Objekt einwirken, **dadurch gekennzeichnet, dass** eine Abgabevorrichtung (1) an einem festen Träger (2) aufgenommen angeordnet ist, wobei unter der Position davon ein Ring (3) aufgenommen angeordnet ist, der dazu bestimmt ist, das zu bearbeitende Objekt (12) darauf zu platzieren, wobei der Ring (3) sich gleitend gelagert zwischen parallelen Führungen (6) mit Dreh- und Längsbewegungsfähigkeit darauf bewegt.

2. System zum Bewegen eines Nahrungserzeugnisses auf einem Schneidetisch oder dergleichen nach Anspruch 1, **dadurch gekennzeichnet, dass** der Ring (3) an dem Umfang mittels eines eingekerbten Randes (7) mit eingekerbten Betätigungsmitteln (8) in Verbindung steht, welche entlang der Führungen (6) wirken, wodurch es möglich ist, kombinierte Dreh- und Schiebebewegungen des Rings (3) durchzuführen.

3. System zum Bewegen eines Nahrungserzeugnisses auf einem Schneidetisch oder dergleichen nach Anspruch 1, **dadurch gekennzeichnet, dass** an dem Ring (3) eine Gitterablage (4) angeordnet ist, auf der das zu bearbeitende Objekt (12) platziert ist, wobei die Ablage (4) den Durchgang eines Schneidewasserstrahls sogar unterhalb davon zulässt, nachdem das zu bearbeitende Objekt (12) eine Schneideanwendung durch eine Druckwasserstrahlabgabevorrichtung (1) durchlaufen hat.

4. System zum Bewegen eines Nahrungserzeugnisses auf einem Schneidetisch oder dergleichen nach Anspruch 2, **dadurch gekennzeichnet, dass** die Mittel (8), welche die Bewegung des Rings (3) bewirken, zwei unabhängige eingekerbte Riemen (9) umfassen, welche durch jeweilige Motorisierungen (11) betätigt werden und seitlich in jeweiligen gegenüberliegenden Bereichen mit dem Ring (3) in Verbindung stehen.

5. System zum Bewegen eines Nahrungserzeugnisses auf einem Schneidetisch oder dergleichen nach Anspruch 2, **dadurch gekennzeichnet, dass** die Mittel (8), welche die Bewegung des Rings (3) bewirken, einen eingekerbten Riemen (14) umfassen, der sich durchgehend in zwei parallelen seitlichen Bahnen erstreckt, welche mit entsprechenden Motorisierungen (11) bereitgestellt sind, einer Seite zu der anderen verlaufend durch Querbahnen, welche sich auf unterschiedlichen Höhen kreuzen und entlang von entsprechenden gegenüberliegenden Halbumfängen des Rings (3) verlaufen.

6. System zum Bewegen eines Nahrungserzeugnisses auf einem Schneidetisch oder dergleichen nach Anspruch 2, **dadurch gekennzeichnet, dass** die Mittel (8), welche die Bewegung des Rings (3) bewirken, zwei Führungsschrauben (15) umfassen, welche durch jeweilige Getriebemotoren (16) betätigt werden und seitlich mit dem Ring (3) in jeweiligen gegenüberliegenden Bereichen in Verbindung stehen.

7. System zum Bewegen eines Nahrungserzeugnisses auf einem Schneidetisch oder dergleichen nach Anspruch 2, **dadurch gekennzeichnet, dass** die Mittel (8), welche die Bewegung des Rings (3) bewirken, zwei Zylinder (17) mit Zahnstangen (18) umfassen, welche seitlich mit dem Ring (3) in jeweiligen gegenüberliegenden Bereichen in Verbindung stehen.

## Revendications

1. Système de déplacement d'un produit alimentaire sur une table de coupe ou analogue, du type comprenant un moyen de support de l'objet destiné à être traité et un moyen de dispositif de décharge destiné à réaliser les opérations à effectuer sur l'objet, lesdits moyens étant agencés dans un assemblage de mouvement relatif l'un par rapport à l'autre afin d'agir avec le dispositif de décharge dans des trajets de directions différentes sur l'objet destiné à être traité, **caractérisé en ce qu'**un dispositif de décharge (1) est agencé incorporé sur un support fixe (2), alors que incorporée sous la position de celui-ci se trouve une couronne (3) prévue pour placer l'objet (12) destiné à être traité sur celle-ci, ladite couronne (3) se déplaçant sur support coulissant entre des guides parallèles (6) avec une capacité de déplacement rotatif et longitudinal par rapport à ceux-ci.

2. Système de déplacement d'un produit alimentaire sur une table de coupe ou analogue selon la revendication 1, **caractérisé en ce que** la couronne (3) se relie sur la périphérie, au moyen d'un bord cranté (7), avec des moyens d'actionnement crantés (8) agissant le long des guides (6), permettant la réalisation de mouvements associés de rotation et de déplacement de ladite couronne (3).

3. Système de déplacement d'un produit alimentaire sur une table de coupe ou analogue selon la revendication 1, **caractérisé en ce que**, agencé sur la couronne (3), se trouve un plateau à grille (4) sur lequel l'objet (12) destiné à être traité est placé, ledit plateau (4) permettant le passage d'un jet d'eau de coupe même sous lui après que l'objet (12) destiné à être traité a été traversé dans une application de coupe au moyen d'un dispositif de décharge à jet d'eau sous pression (1).

4. Système de déplacement d'un produit alimentaire sur une table de coupe ou analogue selon la revendication 2, **caractérisé en ce que** les moyens (8) actionnant le mouvement de la couronne (3) sont composés de deux courroies crantées indépendantes (9) qui sont actionnées par des motorisations respectives (11) et se relient latéralement avec la couronne (3) dans des zones opposées respectives.

5. Système de déplacement d'un produit alimentaire sur une table de coupe ou analogue selon la revendication 2, **caractérisé en ce que** les moyens (8) actionnant le mouvement de la couronne (3) sont composés d'une courroie crantée (14) s'étendant en continu en deux courses latérales parallèles pourvues de motorisations respectives (11), allant d'un côté à l'autre au moyen de courses transversales se croisant à des hauteurs différentes et se trouvant le long de semi-contours opposés respectifs de la couronne (3).

6. Système de déplacement d'un produit alimentaire sur une table de coupe ou analogue selon la revendication 2, **caractérisé en ce que** les moyens (8) actionnant le mouvement de la couronne (3) sont composés de deux vis mères (15) actionnées par des moteurs à engrenages respectifs (16) et se reliant latéralement avec la couronne (3) dans des zones opposées respectives.

7. Système de déplacement d'un produit alimentaire sur une table de coupe ou analogue selon la revendication 2, **caractérisé en ce que** les moyens (8) actionnant le mouvement de la couronne (3) sont composés de deux cylindres (17) avec des arbres à crémaillère (18) se reliant latéralement avec la couronne (3) dans des zones opposées respectives.
